# FASCICULE DE BREVET EUROPEEN

(11) **EP 3 010 334 B1**
(45) Date de publication et mention de la délivrance du brevet: **02.08.2017**
(21) Numéro de dépôt: 14745181.9
(22) Date de dépôt: 18.06.2014
(51) Int. Cl.: A01K 47/02

(54) **FEUILLE POUR CADRE DE RUCHE ET CADRE DE RUCHE AINSI ÉQUIPÉ**
FOLIE FÜR BIENENSTOCKRAHMEN UND BIENENSTOCKRAHMEN DAMIT
SHEET FOR A BEEHIVE FRAME AND BEEHIVE FRAME EQUIPPED WITH SAME

(30) Priorité: 20.06.2013 FR 1355877
(43) Date de publication de la demande: 27.04.2016
(73) Titulaire: Sas Consulting Trading Learning (CTL), 20167 Cuttoli (FR)
(72) Inventeur: MIRAMOND, Jean-Sylvestre, F-20167 Cuttoli (FR)
(74) Mandataire: Nicolle, Olivier
(86) Numéro de dépôt international: PCT/FR2014/051508
(87) Numéro de publication internationale: WO 2014/202901

(56) Documents cités:
- EP-A1- 2 204 089
- GB-A- 592 090
- JP-A- 2005 058 028
- US-A- 215 336
- US-A- 5 145 436

## Description

La présente invention concerne une feuille multicouche destinée à être insérée dans un cadre pour une ruche d'élevage d'abeilles, ainsi qu'un cadre de ruche comportant une telle feuille multicouche.

Les ruches pour l'élevage d'abeilles comprennent généralement un socle formant un plateau d'envol des abeilles, surmonté d'une première boîte formant un corps prévu pour la vie de la colonie d'abeilles, puis d'une hausse ajustée sur ce corps et prévue pour l'exploitation du miel. La hausse est séparée du corps par une grille à reine empêchant la reine de passer du corps dans la hausse. Un toit recouvre l'ensemble pour le protéger.

Le corps comme la hausse sont remplis de cadres verticaux disposés parallèlement fermés par une feuille centrale. Les abeilles recouvrent tes faces de chaque feuille avec des alvéoles dans lesquelles elles déposent du miel.

Deux formats parmi les plus courants sont les ruches appelées Dadant et Langstroph.

Par ailleurs la production de miel en France notamment est en net recul, alors que la consommation est en progression. Il est nécessaire d'apporter des solutions permettant d'augmenter la production de miel, tout en diminuant les coûts d'exploitation.

Un type de cadre connu comporte un contour en bois recevant une feuille de cire qui est collée sur ce contour par la fusion de la cire sur le bois.

Cependant, le collage de la feuille de cire sur le cadre est délicat à réaliser, avec un risque de soudage incomplet et d'ondulations de la feuille lors du chauffage. De plus la feuille de cire est fragile et peut se rompre en cas de choc, ou se ramollir en période chaude, et/ou se détacher du cadre. Ces défauts conduisent à l'abandon du cadre par les abeille.

Suivant le document JP-A-2005.058028, une feuille de papier est enduite sur ses deux faces avec de la cire qui est gaufrée pour former sur chaque face la base d'alvéoles hexagonales. Les abeilles construisent plus facilement leurs alvéoles sur ces bases.

Toutefois, il est difficile d'obtenir une feuille offrant à la fois une bonne résistance permettant d'éviter les déchirures lors des manipulations, ou les ondulations perturbant les abeilles qui ne développent pas leurs alvéoles sur des surfaces qui ne sont pas bien verticales, ainsi que des qualités physico-chimiques convenant aux abeilles et donnant un miel de qualité.

La présente invention a notamment pour but d'éviter ces inconvénients de la technique antérieure.

Elle propose ainsi selon un premier objet une feuille multicouche destinée à être insérée dans un cadre de ruche d'élevage d'abeilles, pour recevoir sur ses faces les alvéoles contenant le miel, comportant une âme centrale donnant une résistance mécanique à la feuille multicouche, et de part et d'autre de l'âme une couche de cire pouvant être mise en forme pour constituer les bases des alvéoles et comprenant une couche intercalaire en papier entièrement cellulosique intercalée entre l'âme et chaque couche de cire. La feuille multicouche offre, grâce à l'âme centrale, une tenue mécanique nécessaire pour obtenir une résistance et une bonne planéité assurant la mise en forme qui convient aux abeilles, ce qui permet d'améliorer les rendements de production du miel. Les couches intercalaires en papier entièrement cellulosique forment une barrière ayant les qualités naturelles appropriées pour le contact alimentaire et empêchant la migration de substances de l'âme vers le miel, afin d'éviter une altération des propriétés organoleptiques du miel.

De préférence, la mise en forme de la cire est réalisée par un procédé de gaufrage de la couche de cire comprenant la compression entre deux matrices du papier cellulosique préalablement enduit de cire, ou un procédé de gaufrage de cette couche comprenant le matriçage de la cire déposée en couche avec un poinçon chauffé.

Dans un mode de réalisation préféré, l'âme est réalisée dans un papier résistant du type « Kraft ».

Typiquement, le grammage de la feuille de papier centrale est de l'ordre de 190 à 250 g/m².

Avantageusement, les couches intercalaires sont collées sur l'âme par une colle cellulosique.

La feuille multicouche comporte de préférence sur son bord supérieur des oreilles de préhension prévues pour dépasser au-dessus du cadre la recevant.

L'invention a aussi pour objet un cadre pour une ruche d'élevage d'abeilles, comprenant une feuille multicouche selon le premier objet. De préférence, la feuille est serrée entre deux demi-cadres similaires disposés en opposition.

Avantageusement, chaque demi-cadre comporte des barres formant un contour globalement rectangulaire, comprenant une face extérieure en forme de « U » qui est creuse, la face intérieure formant le plan de joint du moulage, recevant la feuille multicouche serrée entre les demi-cadres.

Chaque demi-cadre comporte de préférence des picots d'encliquetage formant une pointe comprenant des bossages extérieurs, et une fente intérieure permettant à ces bossages de se rapprocher l'un de l'autre par déformation élastique, ainsi que des perçages prévus pour recevoir de manière ajustée des picots d'encliquetage de l'autre demi-cadre.

Avantageusement, le cadre est réalisé en une résine armée de fibres végétales moulée ou en une matière plastique alimentaire injectée.

Selon un mode de réalisation, le cadre comporte des oreilles de préhension souples obtenues directement par moulage.

En variante, te cadre peut être conçu pur laisser dépasser de son bord supérieur des oreilles de préhension souples appartenant à la feuille multicouche.

Suivant un autre aspect, l'invention prévoit une feuille pour cadre de ruche comportant le long de l'un de ses bords au moins une oreille de préhension destinée à dépasser du bord supérieur d'un cadre de ruche que cette feuille est destinée à équiper.

L'invention prévoit également un cadre équipé d'une telle feuille, positionnée de façon qu'au moins une oreille dépasse le bord supérieur du cadre.

L'invention sera mieux comprise et d'autres caractéristiques et avantages apparaîtront plus clairement à la lecture de la description ci-après donnée à titre d'exemple, en référence aux dessins annexés où :
- la figure 1 est une vue éclatée d'une ruche ;
- la figure 2 est une vue en perspective partielle d'un cadre et de son montage dans la ruche ;
- la figure 3 est une vue en perspective de la feuille ;
- la figure 4 est une vue en coupe d'une feuille selon l'invention, prévue pour un cadre de la ruche ;
- la figure 5 est une vue en perspective d'un demi-cadre recevant la feuille;
- la figure 6 est une vue de détail du cadre suivant le plan de coupe VI-VI de la figure 7 ;
- la figure 7 est une vue de face du demi-cadre.

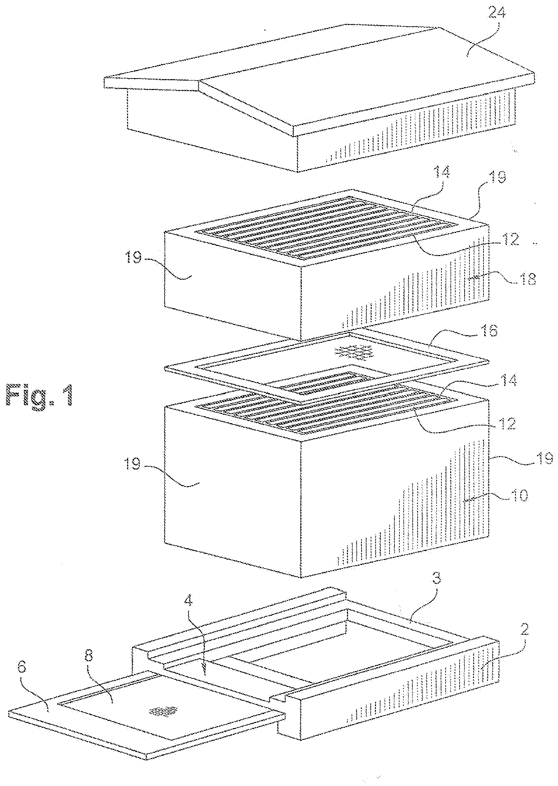

Dans l'exemple non limitatif présenté à la figure 1, la ruche comporte à sa base un socle 2 comprenant une face supérieure plane 3 recevant l'appui du corps 10. A l'avant, la face 3 présente un surbaissement 4 générant en dessous du corps une fente mince permettant l'entrée et la sortie des abeilles. Le surbaissement 4 forme de plus un plateau d'envol des abeilles, dépassant vers l'avant de la ruche.

Le socle 2 comporte une grille d'aération 6 comprenant un encadrement et un grillage 8 dont l'ouverture est réglable par des moyens d'obturation variable non représentés, permettant l'aération réglable de la ruche par en dessous. La grille 6 est extractible par coulissement vers l'avant à la manière d'un tiroir, pour son nettoyage et/ou le réglage des moyens d'obturation.

Le corps principal 10 de la ruche posé sur le socle 2, présente un contour extérieur rectangulaire défini par des panneaux latéraux verticaux assemblés entre eux.

Une hausse 18, ajustée sur le corps 10, possède une section rectangulaire identique et une hauteur réduite par rapport à ce corps.

Une grille à reine 16, dont seul l'encadrement est représenté à la figure 1, est interposée entre le corps 10 et la hausse 18. Le grillage de la grille à reine comporte des orifices de section calibrée permettant le passage des abeilles du corps 10 vers la hausse 18 et inversement, mais empêchant le passage de la reine qui est plus grosse, afin de la maintenir dans le corps 10 pour son activité de ponte des oeufs.

Un toit 24 comprenant deux faces inclinées, couvre l'ensemble de la ruche en débordant du corps 10 et de la hausse 18, afin de la protéger notamment de la pluie. En variante le toit peut comporter une seule face plane.

Le corps 10 comme la hausse 18 sont remplis de cadres 12 disposés verticalement et parallèlement les uns aux autres. De manière connue les abeilles forment sur ces cadres 12 des alvéoles en cire qu'elles remplissent de miel.

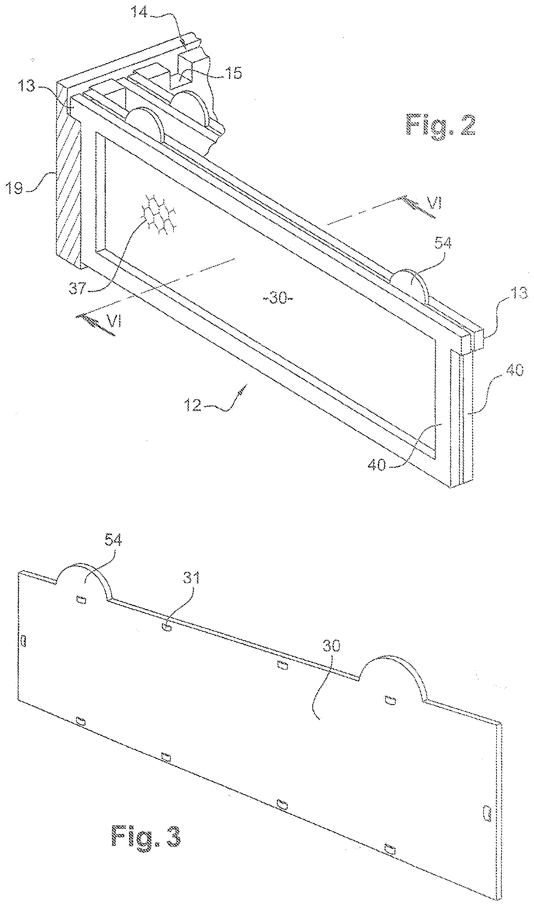

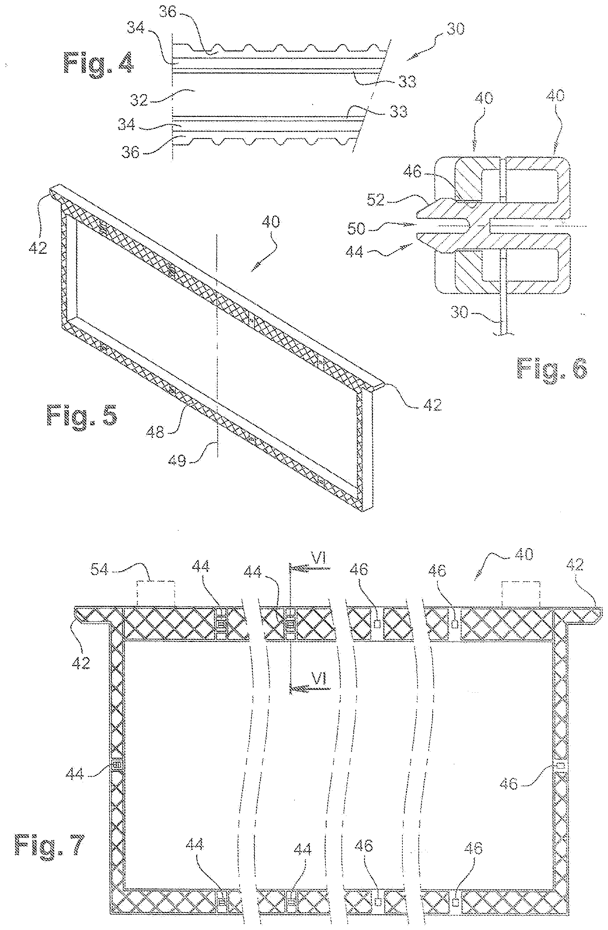

Le corps 10 et la hausse 18 comportent chacun en haut de la face intérieure de deux panneaux opposés 19, typiquement les deux panneaux correspondant à la largeur du contour rectangulaire de la ruche, deux supports 14 (voir aussi figure 2) pour les cadres. Chaque support 14 comporte une série de creux 15 ouverts vers le haut, semblables à des créneaux, destinés à recevoir chacun un bossage latéral 13 (Figures 3 et 5) formé sur le cadre 12 sensiblement dans le prolongement de son bord supérieur.

Les cadres 12 sont ainsi disposés verticalement et parallèlement entre eux, en étant régulièrement espacés grâce au chantage du support 14. Chaque cadre 12 comporte une feuille médiane 30 qui ferme le cadre, et qui en service reçoit sur chaque face les alvéoles en cire fabriquées par les abeilles.

Ayant ainsi décrit un exemple de ruche, on va maintenant décrire les particularités de la feuille multicouche 30 selon l'invention puis du cadre 12 comportant cette feuille, sans que cette description soit limitée aux autres particularités de la ruche. Chaque particularité de la feuille et du cadre est décrite pour sa fonction propre indépendamment des autres particularités, et pour toute combinaison utile de cette particularité ou de sa fonction avec toute(s) autre(s) particularité ou fonction de la feuille et/ou du cadre et/ou de la ruche.

La figure 3 présente une feuille multicouche 30 comprenant une âme centrale 32, réalisée de préférence dans un papier résistant, de préférence de type « Kraft » utilisé généralement pour des emballages, qui est économique. L'âme 32 donne à la feuille 30 sa résistance mécanique et sa tenue en forme plane dans le cadre. Dans le cas d'une âme en papier, le grammage de la feuille de papier centrale 32 prévu pour donner une bonne résistance mécanique à la feuille multicouche, est avantageusement de l'ordre de 230 ou 250 g/m².

Chaque face extérieure de la feuille multicouche 30 est recouverte par une couche de cire d'abeille 36 comportant un gaufrage extérieur hexagonal 37 (Fig. 2) qui constitue la base des alvéoles que tes abeilles vont construire en cire. Le gaufrage facilite le travail des abeilles, et leur impose une bonne régularité dans la disposition des alvéoles afin d'optimiser l'utilisation des surfaces du cadre.

Conformément à l'invention, il y a entre l'âme centrale 32 et chaque couche de cire 36 une couche intercalaire 34 (Fig. 3) en papier entièrement cellulosique et naturelle qui sert de barrière empêchant les composants de l'âme 32 de migrer dans les couches de cire 36. Dans l'exemple représenté, chaque couche intercalaire 34 est fixée à l'âme 32 par collage avec un film de colle cellulosique 33.

La feuille multicouche 30 comportant la feuille de papier centrale 32 résistante, renforcée par les couches appliquées dessus, facilite l'insertion dans un cadre, par exemple par serrage entre deux demi-cadres symétriques, tout en évitant des déchirements accidentels ainsi que des déformations comme des ondulations. De plus les températures élevées ne dégradent pas la résistance de la feuille multicouche 30.

Les feuilles de papier intercalaires 34 entièrement cellulosiques constituent un support habituellement dédié au alimentaire, qui ne comporte pas de substance pouvant migrer vers le miel et perturber les abeilles, ainsi que dégrader les qualités gustatives du miel.

Les feuilles de papier intercalaires 34 avec la couche de cire constituent aussi une barrière pour les éléments venant de l'extérieur, en particulier les graisses, l'air et la vapeur d'eau qui pourraient dégrader l'âme centrale 32. Elles constituent de plus une protection contre la chaleur, et renforcent la résistance de la feuille de papier centrale 32. Ce type de barrière est conforme aux législations françaises et européennes pour l'emballage des produits alimentaires.

La cire 36 peut être une cire d'abeille standard, ou en particulier la cire provenant des abeilles de l'exploitant afin d'obtenir une exploitation biologique permettant d'obtenir une appellation « AOC » (Appellation d'Origine Contrôlé) pour sa production de miel.

La cire peut être déposée sur la feuille multicouche 30 par différents moyens, en particulier par un procédé de projection sur les feuilles intercalaires 34, ou par trempage dans un bain de cire, ou par passage entre deux rouleaux enduits de cette cire.

La feuille multicouche 30 ayant une épaisseur de quelques dixièmes de millimètre est totalement biodégradable, elle peut servir à faire du compost, ou être recyclée.

Un premier procédé de gaufrage de la couche de cire 36 comporte la compression d'un papier cellulosique 34 préalablement enduit de cire qui est fourni en rouleaux, entre deux matrices comprenant sur l'une une forme en creux donnant le relief de la surface extérieure de ce papier, et sur l'autre des formes en relief correspondantes. Dans ce cas, l'apiculteur n'obtient généralement pas une cire venant de son exploitation. Par contre ce procédé peut facilement être industrialisé pour des productions importantes, avec un coût réduit.

Un deuxième procédé de gaufrage de la couche de cire 36 comporte le matriçage de la cire venant avantageusement de l'apiculteur, déposée en couche sur le papier cellulosique 34, avec un poinçon chauffé permettant de ramollir la cire, et d'imprimer le relief sur sa surface.

Dans le mode de réalisation préféré représenté, la feuille multicouche 30 découpée au format approprié est fixée au cadre 12 en étant prise en sandwich entre deux demi-cadres 40.

Les figures 4 à 7 présentent un demi-cadre 40 disposant d'une face intérieure plane 48 prévue pour être en appui sur la feuille supportant les alvéoles contenant le miel, en particulier une feuille multicouche 30 suivant le type présenté ci-dessus. De préférence, les deux demi-cadres 40 sont identiques et disposés de manière symétrique, afin de former un cadre complet.

Le demi-cadre 40 a un contour globalement rectangulaire obtenu par moulage par injection d'une matière plastique, comprenant des barres supérieure et inférieure plus larges, et des barres latérales plus étroites.

Les barres ont une section en « U », qui est creuse du côté de la feuille à l'exception de renfort venus de matière formant des croisillons assurant la rigidité du cadre. Le moulage des demi-cadres 40 se fait facilement avec un moule comprenant un plan de joint disposé suivant la face plane intérieure 48, qui reçoit la feuille multicouche. La face plane 48 est définie par les deux extrémités de la section en « U » et par les bords libres des renforts croisillonnés.

La barre supérieure se prolonge de chaque côté par un bossage latéral 42 dépassant du cadre, les deux bossages des deux demi-cadres 40 réunis étant prévus pour former ensemble les bossages 13 destinés à s'emboîter dans les creux 15 des supports 14 prévus à l'intérieur du corps 10 ou de la hausse 18 de la ruche, afin de suspendre le cadre complet par les deux extrémités de son bord supérieur.

La face intérieure 48 du demi-cadre 40 comporte sur un côté d'une médiane verticale 49 un certain nombre de picots d'encliquetage 44 formant une pointe de section carrée tournée vers l'autre demi-cadre, avec sur deux côtés opposés du carré un petit bossage extérieur 52. Une fente intérieure 50 disposée suivant un plan axial de la pointe, sépare cette pointe en deux parties comprenant chacune un bossage 52 afin de permettre aux bossages 52 de se rapprocher l'un de l'autre par une déformation élastique. De l'autre côté de la médiane verticale 49, la face intérieure 48 comporte des perçages 46 en nombre égal à celui des picots 44 et disposés sur ce demi-cadre 40 en position symétrique des picots 44 par rapport à la médiane verticale 49. Les perçages 46 ont une section carrée permettant à un picot 44 de s'ajuster dedans. A l'état monté (Fig. 6), les bossages 52 de chaque picot 44 de chaque demi-cadre ressortent derrière l'autre demi-cadre 40, respectivement, afin d'assurer un maintien de ces demi-cadres 40 entre eux, et un serrage de la feuille 30 insérée entre eux. Dans ce mode de réalisation, les picots 44 et les perçages 46 sont au nombre de cinq pour les cadres de hausse, et de manière non représentées au nombre de sept pour les cadres du corps de la ruche, qui sont de plus grande taille.

On obtient ainsi de manière simple et économique des cadres résistants et légers, qui sont faciles à assembler, et ensuite à ouvrir pour par exemple échanger la feuille insérée dedans. Ces cadres supportent la centrifugation pour l'extraction du miel.

Comme représenté aux Fig. 3 et 6, les feuilles 30 peuvent comporter des orifices 31 coïncidant avec chaque picot 44 et chaque perçage 46. A l'état monté, les picots 44 traversent les orifices 31. En variante, la feuille peut avoir des dimensions légèrement réduites de façon que les picots 44 passent à l'extérieur de son contour. Dans un cas comme l'autre, les picots 44 contribuent au positionnement de la feuille 30.

On peut avantageusement utiliser une résine végétale armée de fibres qui sont aussi végétales, pour réaliser le moulage des demi-cadres 40 dans une matière renouvelable et biodégradable.

En complément et de manière indépendante du type de feuille et de cadre, la feuille insérée dans le cadre peut comporter sur son bord supérieur et de chaque côté de sa médiane verticale une oreille de préhension 54 dépassant sur le dessus du cadre, de manière à former des prises de traction flexibles qui peuvent se replier horizontalement pour permettre la pose d'une plaque sur le dessus, comme la grille à reine 16 (Fig. 1). Lorsque l'apiculteur ouvre la ruche, ces oreilles de préhension 54 se déplient pour former des prises permettant de soulever facilement le cadre en prenant chaque oreille entre deux doigts, pour sortir le cadre de la rangée de cadres afin de l'extraire du corps ou de la hausse de la ruche.

En variante des oreilles de préhension souples ou rabattables 54 peuvent être réalisées directement sur le cadre lors du moulage des demi-cadres, par exemple par le moulage sur un côté de la barre du dessus de chaque demi-cadre, d'une oreille fine et mince qui est souple, permettant un repli horizontal sur le dessus du cadre. Chaque oreille peut aussi être relativement rigide mais reliée au demi-cadre par une charnière constituée par un amincissement de matière. Il peut être prévu une oreille excentrée sur chaque demi-cadre, de façon que le cadre complet comporte deux oreilles symétriques comme représenté. Après assemblage du cadre, on obtient deux oreilles disposées de chaque côté de ce cadre.

## Revendications

1. Feuille multicouche destinée à être insérée dans un cadre de ruche d'élevage d'abeilles pour recevoir sur ses faces les alvéoles contenant le
miel, comportant une âme centrale (32) donnant une résistance mécanique à la feuille multicouche, et de part et d'autre de l'âme, une couche de cire (36) pouvant être mise en forme pour constituer les bases des alvéoles, **caractérisée en ce qu'**une couche intercalaire en papier entièrement cellulosique (34) est intercalée entre l'âme (32) et chaque couche de cire (36).

2. Feuille multicouche selon la revendication 1, **caractérisée en ce que** la mise en forme de la cire (36) est réalisée par un procédé de gaufrage de la couche de cire comprenant la compression entre deux matrices du papier cellulosique (34) préalablement enduit de cire, ou un procédé de gaufrage de cette couche comprenant le matriçage de la cire déposée en couche avec un poinçon chauffé.

3. Feuille multicouche selon la revendication 1 ou 2, **caractérisée en ce que** l'âme (32) est en papier résistant, en particulier du type « Kraft ».

4. Feuille multicouche selon la revendication 3, **caractérisée en ce que** le grammage de l'âme (32) est de l'ordre de 190 à 250 g/m².

5. Feuille multicouche selon l'une quelconque des revendications précédentes, **caractérisée en ce que** les couches intercalaires (34) sont collées sur l'âme (32) par une colle cellulosique.

6. Feuille multicouche selon l'une quelconque des revendications précédentes, **caractérisée en ce qu'**elle comporte sur son bord supérieur des oreilles de préhension (54) prévues pour dépasser au dessus du cadre ia recevant.

7. Cadre pour une ruche d'élevage des abeilles, **caractérisé en ce qu'**il est équipé d'une feuille multicouche selon l'une quelconque des revendications précédentes.

8. Cadre selon la revendication 7, **caractérisé en ce que** la feuille multicouche (30) est serrée entre deux demi-cadres (40) similaires disposés en opposition.

9. Cadre selon la revendication 8, **caractérisé en ce que** chaque demi-cadre (40) comporte des barres formant un contour globalement rectangulaire, comprenant une face extérieure en forme de « U » qui est creuse, la face intérieure (48) formant le plan de joint du moulage, recevant la feuille multicouche (30) serrée entre les demi-cadres.

10. Cadre selon la revendication 8 ou 9, **caractérisé en ce que** chaque demi-cadre comporte des picots d'encliquetage (44) comprenant des bossages extérieurs (52), et une fente intérieure (50) permettant à ces bossages de se rapprocher l'un de l'autre par déformation élastique, ainsi que des perçages (46) prévus pour recevoir de manière ajustée des picots d'encliquetage de l'autre demi-cadre.

11. Cadre selon l'une quelconque des revendications 7 à 10, **caractérisé en ce qu'**il est réalisé en une résine armée de fibres végétales moulée ou en une matière plastique alimentaire injectée.

12. Cadre selon l'une quelconque des revendications 7 à 11, **caractérisé en ce qu'**il comporte des oreilles de préhension souples (54) obtenues directement par moulage.

13. Cadre selon l'une quelconque des revendications 7 à 11, **caractérisé en ce qu'**il est conçu pour laisser dépasser de son bord supérieur des oreilles de préhension souples (54) appartenant à la feuille multicouche.

## Patentansprüche

1. Mehrschichtige Folie, die zum Einführen in einen Bienenstockrahmen bestimmt ist, um auf ihren Seiten die den Honig enthaltenden Waben aufzunehmen, umfassend einen zentralen Steg (32), der der mehrschichten Folie eine mechanische Widerstandsfähigkeit verleiht und wobei auf jeder Seite des Stegs eine Wachsschicht (36) in Form gebracht werden kann, um die Grundlagen der Waben zu bilden, **dadurch gekennzeichnet, dass** eine Zwischenschicht aus komplett zellulosehaltigem Papier (34) zwischen dem Steg (32) und jeder Wachsschicht (36) zwischengeschaltet ist.

2. Mehrschichtige Folie gemäß Anspruch 1, **dadurch gekennzeichnet, dass** die Formgebung des Wachses (36) durch ein Prägeverfahren der Wachsschicht realisiert ist, umfassend das Komprimieren zwischen zwei Matrizen des zuvor mit Wachs beschichteten zellulosehaltigen Papiers (34) oder ein Prägungsverfahren dieser Schicht, umfassend das Gesenkschmieden des als Schicht mit einem erhitzten Locheisen aufgebrachten Wachses.

3. Mehrschichtige Folie gemäß Anspruch 1 oder 2, **dadurch gekennzeichnet, dass** der Steg (32) aus widerstandsfähigem Papier, insbesondere vom Typ "Kraft" ist.

4. Mehrschichtige Folie gemäß Anspruch 3, **dadurch gekennzeichnet, dass** das Flächengewicht des Stegs (32) in der Größenordnung von 190 bis 250 g/m² ist.

5. Mehrschichtige Folie gemäß irgendeinem der voranstehenden Ansprüche, **dadurch gekennzeichnet, dass** die zwischengeschobenen Schichten (34) durch einen zellulosehaltigen Klebstoff auf einen Steg (32) geklebt sind.

6. Mehrschichtige Folie gemäß irgendeinem der voranstehenden Ansprüche, **dadurch gekennzeichnet, dass** sie auf ihrem oberen Rand Greifgriffe (54) umfasst, die vorgesehen sind, um oberhalb des sie aufnehmenden Rahmens hervorzustehen.

7. Rahmen für einen Bienenstock, **dadurch gekennzeichnet, dass** er mit einer mehrschichtigen Folie gemäß irgendeinem der voranstehenden Ansprüche ausgerüstet ist.

8. Rahmen gemäß Anspruch 7, **dadurch gekennzeichnet, dass** die mehrschichtige Folie (30) zwischen zwei ähnlichen, gegenüber angeordneten Halbrahmen (40) eingespannt ist.

9. Rahmen gemäß Anspruch 8, **dadurch gekennzeichnet, dass** jeder Halbrahmen (40) Stangen umfasst, die einen global rechteckigen Umriss bilden, umfassend eine äußere Seite in "U"-Form, die hohl ist, wobei die innere Seite (48) die Verbindungsebene der Abformung formt, die die zwischen den Halbrahmen eingespannte mehrschichtige Folie (30 aufnimmt.

10. Rahmen gemäß Anspruch 8 oder 9, **dadurch gekennzeichnet, dass** jeder Halbrahmen Einrastzäckchen (44), umfassend äußere Höcker (52), und einen inneren Schlitz (50), der diesen Höckern die Annäherung aneinander per elastischer Verformung ermöglicht, sowie Bohrungen (46), die zur angepassten Aufnahme der Einrastzäckchen des anderen Halbrahmens vorgesehen sind, umfasst.

11. Rahmen gemäß irgendeinem der Ansprüche 7 bis 10, **dadurch gekennzeichnet, dass** er aus einem abgeformten, mit Pflanzenfasern armierten Harz oder aus einem eingespritzten Lebensmittel-Plastikmaterial realisiert ist.

12. Rahmen gemäß irgendeinem der Ansprüche 7 bis 11, **dadurch gekennzeichnet, dass** er direkt per Abformen erhaltene, weiche Greifgriffe (54) umfasst.

13. Rahmen gemäß irgendeinem der Ansprüche 7 bis 11, **dadurch gekennzeichnet, dass** er geplant ist, um von seinem oberen Rand weiche Greifgriffe (54) überstehen zu lassen, die zu der mehrschichtigen Folie gehören.

## Claims

1. A multilayer sheet intended to be inserted into a beehive frame for breeding bees and to receive, on the faces of same, the cells containing honey, comprising a central core (32) providing mechanical strength to the multilayer sheet, and on either side of the core, a layer of wax (36) which can be so shaped as to form the bases of the cells, **characterized in that** an interlayer totally made of cellulose paper (34) is inserted between the core (32) and each layer of wax (36).

2. A multilayer sheet according to claim 1, **characterized in that** wax (36) is shaped using a method for embossing the wax layer, comprising compressing the cellulose paper (34), previously coated with wax, between two matrices, or a method for embossing such layer, comprising stamping the layered wax with a heated punch.

3. A multilayer sheet according to claim 1 or 2, **characterized in that** the core (32) is made of heavy-duty paper, in particular of the "Kraft" type.

4. A multilayer sheet according to claim 3, **characterized in that** the basis weight of the core (32) is of the order of 190 to 250g/m².

5. A multilayer sheet according to any one of the preceding claims, **characterized in that** the interlayers (34) are glued onto the core (32) using a cellulosic glue.

6. A multilayer sheet according to any one of the preceding claims, **characterized in that** the upper edge thereof comprises gripping lugs (54) adapted to protrude above the frame receiving same.

7. A frame for a beehive for breeding bees, **characterized in that** it is provided with a multilayer sheet according to any one of the preceding claims.

8. A frame according to claim 7, **characterized in that** the multilayer sheet (30) is squeezed between two similar half-frames (40) arranged opposite one another.

9. A frame according to claim 8, **characterized in that** each half-frame (40) comprises bars forming a globally rectangular outline, comprising a "U"-shaped outer face which is hollow, with the inner face (48) forming the mold parting surface, receiving the multilayer sheet (30) squeezed between the half-frames.

10. A frame according to claim 8 or 9, **characterized in that** each half-frame comprises locking pins (44) comprising outer bosses (52) and an inner slot (50) enabling such bosses to move closer to each other by elastic deformation, as well as bores (46) provided for receiving, in clamping engagement, the locking pins of the other half-frame.

11. A frame according to any one of claims 7 to 10, **characterized in that** it is made of plant fibers reinforced molded resin or an injected food plastic material.

12. A frame according to any one of claims 7 to 11, **characterized in that** it comprises flexible gripping lugs (54) obtained directly by molding.

13. A frame according to any one of claims 7 to 11, **characterized in that** it is so designed as to let flexible gripping lugs (54) belonging to the multilayer sheet protrude from its upper edge.
